# EUROPEAN PATENT APPLICATION

(11) **EP 4 410 108 A1**
(43) Date of publication of application: **07.08.2024**
(21) Application number: 22876121.9
(22) Date of filing: 26.09.2022
(51) Int. Cl.: A23D 9/02, C11B 3/14, C11C 3/00

(54) **PRODUCTION METHOD FOR OIL/FAT COMPOSITION**

(30) Priority: 29.09.2021 JP 2021159416
(71) Applicant: THE NISSHIN OILLIO GROUP, LTD., Tokyo 104-8285 (JP)
(72) Inventor: TSUJINO, Shogo, Yokohama-shi, Kanagawa 235-8558 (JP); AOYAGI, Kanji, Yokohama-shi, Kanagawa 235-8558 (JP); SEKIGUCHI, Yoshinori, Yokohama-shi, Kanagawa 235-8558 (JP); FUJITA, Naoya, Yokohama-shi, Kanagawa 235-8558 (JP)
(74) Representative: Hasegawa, Kan
(86) International application number: PCT/JP2022/035690
(87) International publication number: WO 2023/054254

(57) **Abstract**

The purpose of the present invention is to provide an oil/fat composition and a method for producing the same, the oil/fat composition being configured such that a flavor derived from a flavor component included in a food that contains the oil/fat composition or included in the oil/fat composition can be suitably released within the oral cavity, and that said flavor can be appropriately sustained. Specifically, provided, among other things, is a method for producing an oil/fat composition, the method comprising: an ozone treatment step (1) in which, using a specific amount of ozone, a starting material oil/fat and the ozone are brought into contact with one another; an activated white earth treatment step (2) in which the oil/fat that has been subjected to the ozone treatment in step (1) is brought into contact with activated white earth; and a deodorizing step (3) in which the oil/fat that has been subjected to the activated white earth treatment in step (2) is subjected to a deodorizing treatment at a temperature that is not greater than a specific temperature.

## Description

### Technical Field

The present invention relates to a method for producing oil and/or fat compositions, as well as oils and/or fats and other compositions.

### Background Art

Oils and/or fats are typically purified by removing various impurities contained in raw material oils and/or fats by purification processes such as degumming, deacidification, bleaching, dewaxing, and deodorization of the raw material oils and/or fats to produce purified oils and/or fats. The purified oils and/or fats thus produced can impart excellent flavor or umami to the purified oils and/or fats themselves or foods containing them by allowing the flavor of other food ingredients or the flavor originating from the flavor components further added to the purified oils and/or fats to spread moderately in the oral cavity of the consumer when consumed as a food together with other food ingredients. However, the method of the purification processes may impair the flavor of the obtained purified oils and/or fats in some cases, and there has also been cases where the flavor derived from the flavor components cannot be properly elicited when the flavor components are separately added to the purified oils and/or fats. Furthermore, oil and/or fat compositions with higher flavor diffusivity or oil and/or fat compositions capable of sustaining the flavor for a longer period have been desired.

For example, Patent Literature 1 states that an edible oil and/or fat obtained through an ozone contact process and a distillation process on oils and/or fats exhibits a light exposure odor improvement effect. However, while Patent Literature 1 discloses that edible oil and/or fat having the light exposure odor improvement effect can be obtained, it is silent on how to properly elicit the flavor derived from foods containing the oil and/or fat composition or the flavor components contained in the oil and/or fat composition described above. Thus, no consideration has been given at all to solutions for the problem.

### Citation List

### Patent Literatures

Patent Literature 1: International Publication No. WO2021/010491

### Summary of Invention

An object of the present invention is to provide an oil and/or fat composition capable of sufficiently eliciting the flavor derived from a food containing an oil and/or fat composition or the flavor components contained in the oil and/or fat composition, a method for producing the same, and the like.

### Means for solution of the problems

The present inventors have found that by bringing oils and/or fats into contact with ozone under certain conditions followed by an activated clay treatment and/or a deodorization process to obtain a treated oil and/or fat composition, it is possible to sufficiently elicit the flavor derived from a food containing oils and/or fats or the flavor components contained in the oil and/or fat composition, thereby completing the present invention.

Embodiments of the present invention may be as follows:
[1] A method for producing an oil and/or fat composition, comprising:
   (1) an ozone treatment step of contacting a raw material oil and/or fat with ozone in an amount of 120 mg or more per 1 kg of the raw material oil and/or fat;
   (2) an activated clay treatment step of contacting the oil and/or fat ozone-treated in step (1) with activated clay; and
   (3) a deodorization step of deodorizing the oil and/or fat activated clay-treated in step (2) at a temperature of 235°C or lower.
[2] The method according to [1], further comprising: a blending step of blending a flavor component into the deodorized oil and/or fat obtained in the step (3).
[3] The method according to [1] or [2], wherein the raw material oil and/or fat is soybean oil.
[4] The method according to any one of [1] to [3], wherein the raw material oil and/or fat is soybean deacidified oil.
[5] The method according to any one of [1] to [4], wherein a contact time between the raw material oil and/or fat and ozone in the step (1) is 1 minute or longer.
[6] The method according to any one of [1] to [5], wherein the amount of ozone in the step (1) is 126.3 mg or more per 1 kg of the raw material oil and/or fat.
[7] The method according to any one of [1] to [6], wherein the deodorization process in the step (3) is performed at a temperature of 230°C or lower.
[8] The method according to any one of [1] to [7], wherein a peroxide value of the oil and/or fat ozone-treated in the step (1) as measured in accordance with an acetic acid-isooctane method is 6 or more.
[9] A flavor-infused oil and/or fat composition comprising: an oil and/or fat composition obtained by the method according to [1]; and a flavor component.
[10] A flavor improver for improving flavor of a flavor component, comprising: an oil and/or fat composition obtained by the method according to [1].

### Advantageous Effects of Invention

According to the present invention, it is possible to provide an oil and/or fat composition capable of sufficiently eliciting the flavor derived from a food containing an oil and/or fat composition or the flavor components contained in the oil and/or fat composition, a method for producing the same, and the like. In particular, according to the present invention, it is possible to provide an oil and/or fat composition capable of properly diffusing the flavor derived from the food containing the oil and/or fat composition and/or the flavor components contained in the oil and/or fat composition in the oral cavity and allowing the flavor to persist moderately, a production method thereof, and the like.

### Description of Embodiments

Hereinafter, the embodiments for implementing the invention will be detailed, and regardless of the expressions such as "preferable" or "more preferable," the preferable modes and more preferable modes illustrated below can be combined together as appropriate. Also, the description of numerical ranges is exemplary, and a range appropriately combining the upper limit and lower limit of each range and the numerical values of the Examples can also be used preferably. Furthermore, terms such as "comprising", "containing" or "including" may be interpreted as "composed essentially of" or "composed only of".

### <Method for Producing Oil and/or Fat Composition>

The method for producing an oil and/or fat composition of the present invention comprises:
(1) an ozone treatment step of contacting a raw material oil and/or fat with ozone in an amount of 120 mg or more per 1 kg of the raw material oil and/or fat;
(2) an activated clay treatment step of contacting the oil and/or fat ozone-treated in step (1) with activated clay; and
(3) a deodorization step of deodorizing the oil and/or fat activated clay-treated in step (2) at a temperature of 235°C or lower. Details of each step will be described below.

### (1) Ozone Treatment Step

In the ozone treatment step, the raw material oils and/or fats are contacted with ozone. The amount of ozone (ozone load) used for contacting the raw material oils and/or fats with ozone may be an amount that allows sufficient contact between the raw material oils and/or fats and ozone. Specifically, it is appropriate that ozone is supplied in an amount of 120 mg or more, preferably 126 mg or more or 126.3 mg or more, more preferably 250 mg or more, further preferably 500 mg or more, and particularly preferably 800 mg or more, per 1 kg of the raw material oils and/or fats while the raw material oils and/or fats are in contact with ozone. There is no particular upper limit on the amount of ozone, but considering capabilities of an ozone generator and environmental impact, for example, 8000 mg or less, preferably 6500 mg or less, more preferably 4000 mg or less, further preferably 2000 mg or less, and particularly preferably 1000 mg or less of ozone per 1 kg of the raw material oils and/or fats would be appropriate. While not being bound by theory, it is believed that the ozone treatment step can efficiently diffuse the flavor derived from the food containing the finally obtained oil and/or fat composition or the flavor derived from the flavor components contained in the oil and/or fat composition in the oral cavity and can sustain the flavor for a long period of time.

Ozone is a gaseous compound at room temperature and pressure consisting of three oxygen atoms. In the ozone treatment, ozone gas may be contacted with the oils and/or fats, or contacted by stirring and mixing water containing ozone with the raw material oils and/or fats.

When ozone gas is used, the flow rate of the ozone gas is, for example, 0.0005 to 0.1 m³/min, preferably 0.001 to 0.05 m³/min, and more preferably 0.003 to 0.01 m³/min, and the ozone concentration in one liter of ozone gas is, for example, 0.1 to 20 mg, preferably 0.5 to 10 mg, and more preferably 1 to 5 mg. When water containing ozone is used, the residual ozone content in water may be, for example, 0.1 to 3 mass ppm, preferably 0.3 to 1.5 mass ppm, and more preferably 0.4 to 1 mass ppm per 1 g of water. However, since there is no need to remove components other than ozone after contacting ozone, it is preferable to contact ozone gas with the oils and/or fats. As a method of contacting ozone gas with oils and/or fats, a method of contacting degassed oils and/or fats with ozone gas and/or a method of contacting by bubbling ozone gas into the oils and/or fats can be used. Note that the ozone generation method is not particularly limited, but a method of generating ozone by colliding electrons having high energy with oxygen molecules by ultraviolet irradiation in air or oxygen or silent electric discharge in air or oxygen can be used. As a practical ozone generator, a commercially available ozone generator used for partial sterilization, deodorization, and bleaching of water, food and the like can be used.

The longer the contact time between the raw material oils and/or fats and ozone, the higher the effect of eliciting the flavor derived from the food containing the oil and/or fat composition obtained in the present invention or the flavor components contained in the oil and/or fat composition. For example, the contact time between the raw material oils and/or fats and ozone is preferably 1 minute or longer, more preferably 10 minutes to 24 hours, further preferably 30 minutes to 6 hours, and particularly preferably 1.5 hours to 4 hours. The contact temperature between the raw material oils and/or fats and ozone is appropriately a temperature at which the raw material oils and/or fats are liquid in order to efficiently contact the ozone with the oils and/or fats. The raw material oils and/or fats are preferably liquid because ozone can dissolve in the raw material oils and/or fats. The contact temperature between the raw material oils and/or fats and ozone is, for example, preferably -10°C or higher, and more preferably 5°C or higher. As the contact temperature increases, oxidation reaction of oils and/or fats is promoted and reaction control becomes difficult. Therefore, the contact temperature is preferably 180°C or lower, and more preferably 100°C or lower. The contact temperature between the raw material oils and/or fats and ozone is further preferably 10 to 60°C, particularly preferably 10 to 40°C, and most preferably room temperature (20°C±5°C). The pressure during contact between the raw material oils and/or fats and ozone may be any condition that can contact the raw material oils and/or fats with ozone in an amount of 120 mg or more per 1 kg of the raw material oils and/or fats. The effects of the invention of the present application can be sufficiently exhibited even around atmospheric pressure. A higher pressure is preferable because dissolution of ozone into the raw material oils and/or fats can be expected to be easier and the reaction can progress more easily, but a high pressure container is required. The pressure during contact between the raw material oils and/or fats and ozone is preferably 50000 to 300000 Pa (about 0.5 to about 3 atmospheres), more preferably 80000 to 150000 Pa, and further preferably atmospheric pressure or 10000 to 10500 Pa. Note that in contacting oils and/or fats with ozone, the water content in the raw material oils and/or fats is not influenced.

Appropriately, the peroxide value (POV) of the oils and/or fats ozone-treated in the above step (1) as measured in accordance with the acetic acid-isooctane method is, for example, 6 or more, preferably 8 or more, more preferably 15 or more, and further preferably 20 or more. There is no need to specifically define an upper limit value of the peroxide value (POV), but for example, it is appropriate to have 100 or less, preferably 80 or less, more preferably 60 or less, further preferably 40 or less. Here, the peroxide value (POV) is measured in accordance with the acetic acid-isooctane method and represents iodine released when potassium iodide is added to the sample in milliequivalents per 1 kg of the sample. Specifically, the peroxide value (POV) can be determined based on the measurement method of "The JOCS Standard Methods for the Analysis of Fats, Oils and Related Materials 2.5.2.1-2013 Peroxide Value (Acetic Acid-isooctane Method)" established by the Japan Oil Chemists' Society.

### [Raw Material Oils and/or Fats]

The oils and/or fats used as the raw material oils and/or fats in the present invention can use any oils and/or fats mainly containing ordinary oils and/or fats. Ordinary oils and/or fats include vegetable and animal oils and/or fats, hydrogenated oils thereof, fractionated oils, transesterified oils, etc., which can be used alone or in combination. Examples of vegetable and animal oils and/or fats include soybean oil, high-oleic soybean oil, rapeseed oil, high-oleic rapeseed oil, sunflower oil, high-oleic sunflower oil, olive oil, safflower oil, high-oleic safflower oil, corn oil, cottonseed oil, rice oil, sesame oil, grape seed oil, peanut oil, cottonseed oil, grape oil, wheat germ oil, flax oil, perilla oil, palm oil, palm kernel oil, coconut oil, and other vegetable oils and/or fats, and beef tallow, milk fat, fish oil, lard, liver oil, whale oil, bone oil, and other animal oils and/or fats, as well as formulated oils and/or fats prepared by mixing two or more of these. Oils and/or fats used as the raw material oils and/or fats are preferably liquid oils and/or fats at the time of distribution or storage (for example, 10 to 40°C). Soybean oil and soybean deacidified oil obtained by deacidifying soybean oil are particularly preferable. As the raw material oils and/or fats in the present invention, it is preferable to use oils and/or fats containing 10 to 100 mass% soybean oil, more preferably oils and/or fats containing 50 to 100 mass% soybean oil.

As the raw material oils and/or fats, purified oils and/or fats that have undergone a purification process can be used in addition to unpurified oils and/or fats. As the purified oils and/or fats that have undergone a purification process, oils and/or fats that have undergone one or more or all of degumming, deacidification, bleaching, dewaxing, deodorization, and other processes usually used for purification of ordinary oils and/or fats can be used. Soybean deacidified oil from which liberated acidic components such as fatty acids have been removed by further subjecting soybean oil to alkali deacidification process or the like can be preferably used.

### (2) Activated Clay Treatment Step

In the activated clay treatment step, the oils and/or fats ozone-treated in step (1) are contacted with activated clay. As for the activated clay treatment step, the methods and conditions usually performed in the bleaching process of oils and/or fats can be used, except for using activated clay. The activated clay treatment step is performed on the oils and/or fats that have undergone the ozone treatment step (1) described above without undergoing a deodorization process, and may serve as a so-called bleaching process.

The various conditions in the activated clay treatment step are not particularly limited, and conditions of a bleaching process used in a usual method for producing oils and/or fats can be used. For example, after adding activated clay to the raw material oils and/or fats, heating may be performed at a temperature of, for example, 70 to 150°C, preferably 80 to 130°C, and more preferably 90 to 120°C for, for example, 5 to 120 minutes, preferably 10 to 90 minutes, and more preferably 15 to 60 minutes to contact the oils and/or fats with the activated clay. After finishing the activated clay treatment step, activated clay and other impurities can be removed by filtration, centrifugation, or the like to obtain activated clay-treated oils and/or fats (bleached oils and/or fats). It is preferable to perform the activated clay treatment under reduced pressure in order to remove moisture contained in the activated clay to increase adsorption capacity. The pressure (degree of reduced pressure) is, for example, 20000 Pa or less, preferably 300 to 13000 Pa, and more preferably 2000 to 10000 Pa reduced pressure.

In addition to the above activated clay treatment, a bleaching process using usually used clay such as alkaline clay, acidic clay, or neutral clay, activated carbon, or the like may be previously performed before the activated clay treatment.

The actual activated clay treatment step may be performed, for example, by charging the contacted raw material into a treatment tank and optionally stirring the raw material. Examples of the treatment tank include tanks, columns, and filters. In the case of a tank, it is preferable that the tank be equipped with a stirrer, and after contacting the mixtures containing the raw material oils and/or fats and activated clay with each other, it is preferable to separate each component in the mixtures by a filtration or centrifugation machine or the like. The activated clay treatment step may be performed in the presence of auxiliary agents such as a filter aid to facilitate filtration. Examples of the filter aid include inorganic filter aids such as celite and organic filter aids such as fibers exemplified by cellulose and pulverized products thereof. Activated clay may be packed and held in a column or filter and a liquid raw material oil and/or fat may be passed through the column or filter. Passing the liquid raw material oils and/or fats can separate the above components at the same time as passing, and the apparatus can also be more compact than a tank, which is preferable. Preferable examples of the filter include a flat plate filter, filter press, and Amafilter. The tank, column, and filter can be made of glass, plastics, or metals such as iron and stainless steel, but metals are preferable in terms of durability.

### [Activated Clay]

Examples of the activated clay include those obtained by activating clay or acidic clay with an acid such as mineral acid. The activated clay preferably has a pH of, for example, 1.0 or more, preferably 2.0 or more, and more preferably 3.0 or more, and, for example, 6.0 or less, preferably 5.0 or less, and more preferably 4.0 or less, as the pH of a liquid in which the activated clay is suspended in water at a concentration of 5 mass% (5 mass% aqueous suspension). The upper limit and lower limit of the above pH may be a range that combines them appropriately. For example, the range of pH=1.0 to 6.0 is preferable, more preferably pH=2.0 to 5.0, and particularly preferably pH=3.0 to 4.0.

Examples of preferable activated clay include commercially available products such as Galleon Earth (manufactured by Mizusawa Industrial Chemicals, Ltd., pH=3.3 in a 5 mass% aqueous suspension) and SUPER PLUS (manufactured by TAIKO CLAY MARKETING SDN. BHD., pH=3.9).

The amount of the activated clay used is preferably 0.05 to 10 mass%, more preferably 0.1 to 5 mass%, further preferably 0.5 to 2 mass%, and particularly preferably 1 mass%±0.5 mass% relative to the mass of the oils and/or fats to be treated.

### (3) Deodorization Step

In the deodorization step, the oils and/or fats activated clay-treated in step (2) are deodorized at a temperature of 235°C or lower. Here, deodorization is performed by heating the oils and/or fats activated clay-treated to an appropriate temperature and optionally applying steam. The heating temperature condition is preferably 235°C or lower, more preferably 230°C or lower, and further preferably 225°C or lower. The lower limit value of the heating temperature is, for example, 100°C or higher, preferably 150°C or higher, more preferably 170°C or higher, further preferably 180°C or higher, and particularly preferably 200°C or higher. The heating temperature condition may be any temperature range that combines these lower limit values and upper limit values, but it is appropriate to perform at a relatively low temperature of 235°C or lower compared to preferable temperature conditions in a usual deodorization process of oils and/or fats and at a temperature of 170°C or higher where deodorization is moderately performed, in order to sufficiently elicit the flavor derived from the food containing the oil and/or fat composition obtained in the present invention or the flavor components contained in the oil and/or fat composition.

The deodorization time can be appropriately selected as long as a sufficient deodorization effect can be expected, and is, for example, 15 to 180 minutes, preferably 20 to 150 minutes, and more preferably 40 to 100 minutes.

The heating may be performed under reduced pressure as needed. Appropriately, the reduced pressure condition is, for example, 10 to 1300 Pa, preferably 100 to 1000 Pa, and more preferably 200 to 600 Pa.

It is preferable to perform the heating while blowing steam into the oils and/or fats. Appropriately, the temperature of the steam blown is, for example, 80°C or higher, preferably 100°C or higher, and more preferably 110°C or higher, with an upper limit of 150°C. The amount of steam blown is preferably 0.5 to 10 mass% and more preferably 1 to 5 mass% relative to the mass of the oils and/or fats to be treated.

In the deodorization step, an organic acid may be added at the end or after the deodorization step to enhance oxidation stability of the oils and/or fats, if necessary. Examples of the organic acid include citric acid, ascorbic acid, succinic acid, malic acid, and oxalic acid, and the amount added is preferably 0.1 to 100 ppm, more preferably 1 to 50 ppm, further preferably 2 to 40 ppm, and most preferably 2 to 20 ppm.

### (4) Blending Step

The oil and/or fat composition can be obtained by the above step (3), but a blending step of obtaining a flavor-infused oil and/or fat composition by blending flavor components into the deodorized oils and/or fats obtained in the above step (3) may be optionally included. The present invention aims to sufficiently elicit the flavor of foods containing the oil and/or fat composition by the steps (1) to (3) described above. When the oil and/or fat composition contains flavor components, it is capable of properly diffusing in the oral cavity the flavor derived from the flavor components as well and allowing the flavor to persist moderately. The flavor components here refer to both components that are originally contained in foods (including beverages) to give flavor (including flavor components originally contained in oils and/or fats) and components that are added to foods to give new flavors. Examples of the flavor components include acidulants, sweeteners, fragrances, crude oils, and other flavor components, but oil-soluble components that have good compatibility with the oil and/or fat composition and can be expected to spread in the oral cavity together with the oil and/or fat composition are preferable. Further preferably, they are oil-soluble components such as flavor components of flavor oils and flavor components of crude oils. Note that water-soluble flavor components, by being dispersed as fine particles in the oil and/or fat composition, or by being solubilized and emulsified using an emulsifier, can be expected to spread in the oral cavity together with the oil and/or fat composition, which is preferable. Specific examples of flavor components include, as acidulants, natural or synthetic acidulants such as acetic acid, lactic acid, tartaric acid, malic acid, gluconic acid, citric acid, and succinic acid. Examples of sweeteners include natural or synthetic sweeteners such as sugar, glucose, sucrose, fructose, oligosaccharides, starch syrup, saccharin, aspartame, neotame, sucralose, and acesulfame K. Examples of fragrances include those having flavors of seafood, herbs and spices, vegetables such as garlic, green onion, and onion, dairy products such as butter and cream, fruits and citrus fruits such as orange, grapefruit, yuzu, and lemon. These flavors include not only unprocessed flavors but also roasted, smoked, and fried flavors. These flavors may use fragrances containing components derived from synthetic and/or natural substances. Note that in the present invention, edible oils and/or fats imparted with these flavors (flavor oils) are also included in the fragrances. Examples of oils and/or fats imparted with flavors preferably include pork flavor oil, beef flavor oil, garlic oil, green onion oil, ginger oil, citrus oils, Chinese flavor oil, and chili oil. Examples of crude oils include roasted sesame oil and crude olive oil. Only one type of flavor component may be used or a combination of two or more types may be used. Appropriately, the mass of the flavor components relative to the mass of the flavor-infused oil and/or fat composition is, for example, 0.01 to 10 mass%, preferably 0.03 to 5 mass%, more preferably 0.05 to 1 mass%, and further preferably 0.1±0.02 mass%.

### (5) Other Optional Steps

In addition to the above steps, the raw material oils and/or fats and oils and/or fats at some point in each step may be subjected to other optional steps such as degumming process, deacidification process, dewaxing process, or fractionation process to obtain an oil and/or fat composition. The degumming process may be performed by contacting the oils and/or fats with an acidic solution such as phosphoric acid, citric acid aqueous solution, oxalic acid aqueous solution, or succinic acid aqueous solution, followed by removing the separated gummy substances by centrifugation, adsorption, or the like. Note that removal of the separated gummy substances may be performed simultaneously with removal of fatty acid soaps in the deacidification process described later.

The deacidification process may be performed by contacting the oils and/or fats with an alkali such as sodium hydroxide or potassium hydroxide. In this case, free fatty acids and acids used in the degumming process in the oils and/or fats are removed by centrifugation, water washing, or the like as fatty acid soaps or salts. The deacidification process may also be performed by distilling and removing free fatty acids in the oils and/or fats.

The dewaxing process and fractionation process are a process of removing waxy substances that easily solidify at low temperatures from the raw material oils and/or fats by cooling the raw material oils and/or fats, or separating high-melting point oils and/or fats (such as liquid oils and/or fats) from low-melting point oils and/or fats (such as solid fats). The steps (1) to (5) above may be performed multiple times.

In the present invention, it is desirable to perform the ozone treatment step (1) prior to the activated clay treatment step (2). Treating the raw material oils and/or fats in this order makes it possible to sufficiently elicit the flavor derived from the food containing the oil and/or fat composition or the flavor components contained in the oil and/or fat composition. When a separate bleaching step is performed as an additional step other than the activated clay treatment step (2), it is desirable to perform the bleaching step after the ozone treatment step (1). It is preferable to perform the deodorization step (3) after the bleaching step or activated clay treatment step (2). The other optional steps can be performed at any stage as long as they do not affect the effects of the present invention, but it is preferable to perform the degumming and deacidification processes before the ozone treatment step (1).

### <Oil and/or Fat Composition>

The oil and/or fat composition containing oils and/or fats treated in accordance with the present invention can properly diffuse the flavor of foods containing the oil and/or fat composition or the flavor derived from flavor components in the oral cavity, and can sustain the flavor moderately. The exact reasons why excellent flavor properties for oils and/or fats can be obtained by treating in accordance with the method of the present invention as described above and why it can greatly influence the flavor properties of flavor components added to the oil and/or fat composition as described later are not clear, but it is considered that by treating oils and/or fats in accordance with the present invention, impurities and contaminants in the finally obtained oil and/or fat composition are moderately removed, thereby obtaining the effects concerning the above flavor. The oil and/or fat composition obtained in the present invention may contain one or two or more oils and/or fats generated by the method of the present invention. It may also optionally contain other components such as other untreated oils and/or fats, plant sterols, lecithin, antioxidants, and colorants. The oil and/or fat composition obtained in the present invention preferably contains 50 mass% or more, more preferably 70 mass% or more, and further preferably 90 mass% or more of the treated oils and/or fats relative to the total mass of the oil and/or fat composition. Although 100 mass% is preferable as the upper limit of the content of the treated oils and/or fats, it may be 98 mass%, 95 mass%, 90 mass%, 85 mass%, or 80 mass%.

### <Flavor-Infused Oil and/or Fat Composition>

An embodiment of the present invention is a flavor-infused oil and/or fat composition. The flavor-infused oil and/or fat composition contains an oil and/or fat composition obtained by the above-described production method of the oil and/or fat composition and the above-described flavor components. Although the term "oil and/or fat composition" in the present invention also includes compositions containing flavor components, compositions containing flavor components may be specifically referred to as "flavor-infused oil and/or fat compositions." Foods containing oil and/or fat compositions are also a kind of "flavor-infused oil and/or fat composition" and can also be referred to as "flavor-infused edible oil composition." The flavor-infused oil and/or fat composition can properly diffuse the flavor derived from the flavor components contained in the oil and/or fat composition in the oral cavity and can sustain the flavor moderately. It is surprising that an oil and/or fat composition produced through specific treatment steps can synergistically improve the flavor properties of the flavor components. The types of usable flavor components are as described above, and either only one type of flavor component may be used or two or more types may be combined. Appropriately, the mass of the flavor components relative to the mass of the flavor-infused oil and/or fat composition is, for example, 0.01 to 10 mass%, preferably 0.03 to 5 mass%, more preferably 0.05 to 1 mass%, and further preferably 0.1±0.02 mass%.

### <Applications of Oil and/or Fat Composition>

The above oil and/or fat composition can be used in various fields that use oils and/or fats as a raw material. In particular, it can be used in food fields such as edible oils, butter, margarine, shortening, and seasonings, and non-food fields such as fragrances, oral cleaners, and dentifrices. The content of the above oil and/or fat composition in food or non-food products varies depending on the type of the target product. For example, when the finally obtained product as a whole is taken as 100 mass%, for example, it is 0.1 to 99 mass%, preferably 0.1 to 90 mass%, more preferably 0.5 to 80 mass%, and further preferably 1 to 70 mass%. Products of the present invention can be produced by known methods except for using the above oil and/or fat composition as a raw material.

The above oil and/or fat composition is an oil and/or fat composition capable of sufficiently eliciting the flavor derived from a food containing the oil and/or fat composition or the flavor components contained in the oil and/or fat composition. The flavor components in foods include not only components that are originally contained in foods to give flavor (including flavor components contained in oils and/or fats) but may also be flavor components blended separately from the oil and/or fat composition. Examples of the flavor components include, in addition to flavor components of fruits, vegetables, seafood, eggs, meats, cereals, etc., the aforementioned acidulants, sweeteners, fragrances, crude oils, and other flavor components. Oil-soluble components that have good compatibility with the oil and/or fat composition and can be expected to spread together with the oil and/or fat composition in the oral cavity are preferable.

### <Flavor Improver>

The above oil and/or fat composition can also be used as a flavor improver for improving the flavor of flavor components. For example, by adding to flavor components such as flavor oils a flavor improver containing the above oil and/or fat composition, it is possible to properly diffuse in the oral cavity the flavor derived from foods and flavor components and to sustain the flavor moderately. It may also be used as a base oil for flavor oils.

The above flavor improver preferably contains 50 to 100 mass%, more preferably 80 to 100 mass%, and further preferably 90 to 100 mass% of the above oil and/or fat composition.

However, a preferable flavor improver of the present invention preferably consists essentially only of the oil and/or fat composition. Here, "essentially" means that components other than the oil and/or fat composition contained in the flavor improver account for, for example, 0 to 10 mass%, preferably 0 to 5 mass%, and more preferably 0 to 3 mass% when the flavor improver is taken as 100 mass%.

The amount of the flavor improver added to the flavor components is, relative to the total mass of the flavor improver, appropriately such that the flavor components are contained at, for example, 0.01 to 10 mass%, preferably 0.03 to 5 mass%, more preferably 0.05 to 1 mass%, and further preferably 0.1±0.02 mass%.

### Examples

The present invention will be specifically described below with reference to Examples and Comparative Examples, but the present invention is not limited to these Examples.

### <Evaluation Method>

### [Peroxide Value (POV)]

To measure the oxidation degree of oils and/or fats after the ozone treatment step or air oxidation step, the peroxide value (POV) of the oils and/or fats was measured. Specifically, the peroxide value (POV) was analyzed in accordance with "The JOCS Standard Methods for the Analysis of Fats, Oils and Related Materials 2.5.2.1-2013 Peroxide Value (Acetic Acid-Isooctane Method)" established by the Japan Oil Chemists' Society.

### [Sensory Evaluation]

The flavor of the oil and/or fat compositions obtained in Examples and Comparative Examples was evaluated by a sensory test by professional panelists. First, pork flavor oil (trade name "Back Aroma Pork Oil CS1283" by Ogawa & Co., Ltd.) was added as a flavor component to the oil and/or fat compositions obtained in each Example and Comparative Example in an amount of 0.1 mass% relative to the mass of the oil and/or fat composition to prepare samples for sensory evaluation. In the sensory evaluation, 12 male and female panelists in their 20s to 40s who were sensory evaluation specialists conducted a 5-point evaluation of the flavor according to the following evaluation items and evaluation criteria. In the evaluation, the evaluation points of Comparative Example 1 described later were taken as 1 point, the evaluation points of Comparative Example 2 described later were taken as 2 points, and the panelists were informed to allocate points thereafter considering that for points 3 to 5, a 1 point difference on the scale should be equivalent to the perceived difference between point 2 and point 1, and prior adjustment was made through discussion so that there was no difference in evaluation points between the panelists regarding Comparative Example 1, Comparative Example 2, etc.

### - Evaluation Items -

(1) Diffusivity: Whether the flavor diffuses well in the oral cavity when the sample is contained in the oral cavity
(2) Persistence: Whether the flavor persists long when the sample is contained in the oral cavity

### - Evaluation Points -

1 point: does not apply (not felt)
2 points: barely applies
3 points: applies
4 points: strongly applies
5 points: extremely strongly applies

### <Each Step>

The "oils and/or fats to be treated" in the following steps refers to soybean deacidified oil (liquid, manufactured by Nisshin OilliO Group, Ltd.) used as the raw material oils and/or fats if there is no step immediately before, or the oils and/or fats obtained in the step immediately before if there is one.

### [Ozone Treatment Step 1]

Ozone (ozone concentration 2.02 mg/L, flow rate 0.005 m³/min) generated using an ozone generator (OZSD-1200D, EBARA JITSUGYO CO., LTD.) was blown into 2.4 kg of the oils and/or fats to be treated placed in a 3 liter round-bottom flask at room temperature (20°C) and atmospheric pressure for 192 minutes to obtain ozone-treated oils and/or fats (ozone amount: 808 mg/kg oils and/or fats).

### [Ozone Treatment Step 2]

Except that the time for blowing ozone into the oils and/or fats to be treated was set to 15 minutes, ozone-treated oils and/or fats (ozone amount: 63.1 mg/kg oils and/or fats) were obtained in the same manner as in Ozone Treatment Step 1.

### [Ozone Treatment Step 3]

Except that the time for blowing ozone into the oils and/or fats to be treated was set to 30 minutes, ozone-treated oils and/or fats (ozone amount: 126.3 mg/kg oils and/or fats) were obtained in the same manner as in Ozone Treatment Step 1.

### [Ozone Treatment Step 4]

Except that the time for blowing ozone into the oils and/or fats to be treated was set to 60 minutes, ozone-treated oils and/or fats (ozone amount: 252.5 mg/kg oils and/or fats) were obtained in the same manner as in Ozone Treatment Step 1.

### [Air Oxidation Treatment Step 1]

Except that instead of ozone, dry air (flow rate 0.005 m³/min) was blown at 80°C for 180 minutes into the oils and/or fats to be treated, air-oxidized treated oils and/or fats were obtained in the same manner as in Ozone Treatment Step 1.

### [Activated Clay Treatment Step 1]

To 1.2 kg of the oils and/or fats to be treated, activated clay (trade name "Galleon Earth", manufactured by Mizusawa Industrial Chemicals, Ltd.) was added in an amount of 1 mass% activated clay relative to the mass of the oils and/or fats to be treated. The mixture was treated by heating and stirring at 110°C for 20 minutes, and the activated clay was removed by filtration to obtain activated clay-treated oils and/or fats.

### [Activated Clay Treatment Step 2]

Except for adding activated clay in an amount of 0.5 mass% relative to the mass of the oils and/or fats to be treated, activated clay-treated oils and/or fats were obtained in the same manner as in Activated Clay Treatment Step 1.

### [Acid Clay Treatment Step 1]

Except for using acidic clay (trade name "Mizuka Ace #300", manufactured by Mizusawa Industrial Chemicals, Ltd.) instead of activated clay, acid clay-treated oils and/or fats were obtained in the same manner as in Activated Clay Treatment Step 1.

### [Deodorization Step 1]

The oils and/or fats to be treated in an amount of 1.0 kg was deodorized for 60 minutes at a temperature of 255°C and a pressure of 400 Pa while blowing 3 mass% steam relative to the oils and/or fats to be treated. Thereafter, during cooling after the deodorization process, a 10 mass% citric acid aqueous solution was added so that the citric acid would be 10 ppm relative to the mass of the obtained deodorized oils and/or fats to obtain an oil and/or fat composition.

### [Deodorization Step 2]

Except that the deodorization temperature was set to 220°C, an oil and/or fat composition was obtained in the same manner as in Deodorization Step 1.

### [Deodorization Step 3]

Except that the deodorization temperature was set to 160°C, an oil and/or fat composition was obtained in the same manner as in Deodorization Step 1.

### [Deodorization Step 4]

Except that the deodorization temperature was set to 180°C, an oil and/or fat composition was obtained in the same manner as in Deodorization Step 1.

### [Deodorization Step 5]

Except that the deodorization temperature was set to 230°C, an oil and/or fat composition was obtained in the same manner as in Deodorization Step 1.

The oil and/or fat compositions of Examples and Comparative Examples were produced by combining the above steps. The raw material oils and/or fats used in Examples and Comparative Examples were the aforementioned soybean deacidified oil (liquid, manufactured by Nisshin OilliO Group, Ltd.). Specifically, the oil and/or fat compositions were produced by performing each step sequentially as shown in Tables 1 to 4.

**Table 1**

| | Example 1 | Comparative Example 1 | Comparative Example 2 | Comparative Example 3 | Comparative Example 4 |
|---|---|---|---|---|---|
| Step | Raw Material Oil and/or Fat | Raw Material Oil and/or Fat | Raw Material Oil and/or Fat | Raw Material Oil and/or Fat | Raw Material Oil and/or Fat |
| | ↓ | ↓ | ↓ | ↓ | ↓ |
| | Ozone Treatment Step 1 | ↓ | Ozone Treatment Step 1 | Activated Clay Treatment Step 1 | Air Oxidation Treatment Step 1 |
| | ↓ | ↓ | ↓ | ↓ | ↓ |
| | Activated Clay Treatment Step 1 | Activated Clay Treatment Step 1 | Activated Clay Treatment Step 1 | Ozone Treatment Step 1 | Activated Clay Treatment Step 1 |
| | ↓ | ↓ | ↓ | ↓ | ↓ |
| | Deodorization Step 2 | Deodorization Step 1 | Deodorization Step 1 | Deodorization Step 2 | Deodorization Step 2 |
| | ↓ | ↓ | ↓ | ↓ | ↓ |
| | Oil and/or Fat Composition | Oil and/or Fat Composition | Oil and/or Fat Composition | Oil and/or Fat Composition | Oil and/or Fat Composition |
| POV^{(*1)} | 20.0 | - | 19.8 | 12.3 | 20.3 |
| (1) Diffusivity^{(*2)} | 3.7 | 1.0 | 2.0 | 2.2 | 1.2 |
| | (0.8) | (-) | (-) | (0.4) | (0.4) |
| (2) Persistence^{(*2)} | 3.5 | 1.0 | 2.0 | 2.2 | 1.2 |
| | (0.5) | (-) | (-) | (0.4) | (0.4) |

| | | | | | |
|---|---|---|---|---|---|
| *1: POV is the peroxide value after the ozone treatment step or air oxidation step. *2: The top values for (1) and (2) are mean values, and the values in parentheses below are standard deviations. | | | | | |

As shown in Table 1, Example 1 resulted in strong diffusivity in the oral cavity and long persistence of flavor. Therefore, it has been shown that it is appropriate to perform the activated clay treatment step after the ozone treatment and that the deodorization temperature is suitable at a low temperature (about 220°C). In Comparative Example 4, although the peroxide value is similar to that in Example 1, the oral cavity diffusivity and persistence are inferior because oxidation treatment was performed with air instead of ozone. Thus, it has been shown that ozone treatment is necessary as the oxidation condition, not mere air oxidation treatment.

**Table 2**

| | Example 2 | Example 3 | Comparative Example 5 |
|---|---|---|---|
| Step | Raw Material Oil and/or Fat | Raw Material Oil and/or Fat | Raw Material Oil and/or Fat |
| | ↓ | ↓ | ↓ |
| | Ozone Treatment Step 3 | Ozone Treatment Step 4 | Ozone Treatment Step 2 |
| | ↓ | ↓ | ↓ |
| | Activated Clay Treatment Step 1 | Activated Clay Treatment Step 1 | Activated Clay Treatment Step 1 |
| | 1 | 1 | 1 |
| | Deodorization Step 2 | Deodorization Step 2 | Deodorization Step 2 |
| | ↓ | ↓ | ↓ |
| | Oil and/or Fat Composition | Oil and/or Fat Composition | Oil and/or Fat Composition |
| POV^{(*1)} | 6.4 | 8.8 | 4.9 |
| (1) Diffusivity^{(*2)} | 2.9 | 3.5 | 1.5 |
| | (0.7) | (0.5) | (0.5) |
| (2) Persistence^{(*2)} | 2.8 | 3.5 | 1.5 |
| | (0.7) | (0.5) | (0.5) |

| | | | |
|---|---|---|---|
| *1: POV is the peroxide value after the ozone treatment step. *2: The top values for (1) and (2) are mean values, and the values in parentheses below are standard deviations. | | | |

From the results in Table 2, Comparative Example 5 with a small amount of ozone (63.1 mg/kg) showed inferior (1) diffusivity and (2) persistence compared to Example 2 (126.3 mg/kg) and Example 3 (252.5 mg/kg).

**Table 3**

| | Example 4 | Comparative Example 6 |
|---|---|---|
| Step | Raw Material Oil and/or Fat | Raw Material Oil and/or Fat |
| | ↓ | ↓ |
| | Ozone Treatment Step 1 | Ozone Treatment Step 1 |
| | ↓ | ↓ |
| | Activated Clay Treatment Step 2 | Acid Clay Treatment Step 1 |
| | ↓ | ↓ |
| | Deodorization Step 2 | Deodorization Step 2 |
| | ↓ | ↓ |
| | Oil and/or Fat Composition | Oil and/or Fat Composition |
| POV^{(*1)} | 19.6 | 20.1 |
| (1) Diffusivity^{(*2)} | 3.6 | 2.2 |
| | (0.5) | (0.7) |
| (2) Persistence^{(*2)} | 3.6 | 2.1 |
| | (0.5) | (0.7) |

| | | |
|---|---|---|
| *1: POV is the peroxide value after the ozone treatment step. *2: The top values for (1) and (2) are mean values, and the values in parentheses below are standard deviations. | | |

By comparing Example 1 in Table 1 and Example 4 in Table 3, it can be understood that sufficient (1) diffusivity and (2) persistence are expressed even when the amount of activated clay added is reduced (Example 4). On the other hand, it has been found that in Comparative Example 6 using acidic clay instead of activated clay, sufficient (1) diffusivity and (2) persistence are not expressed.

**Table 4**

| | Example 5 | Example 6 | Example 7 |
|---|---|---|---|
| Step | Raw Material Oil and/or Fat | Raw Material Oil and/or Fat | Raw Material Oil and/or Fat |
| | ↓ | ↓ | ↓ |
| | Ozone Treatment Step 1 | Ozone Treatment Step 1 | Ozone Treatment Step 1 |
| | ↓ | ↓ | ↓ |
| | Activated Clay Treatment Step 1 | Activated Clay Treatment Step 1 | Activated Clay Treatment Step 1 |
| | ↓ | ↓ | ↓ |
| | Deodorization Step 3 (160°C) | Deodorization Step 4 (180°C) | Deodorization Step 5 (230°C) |
| | ↓ | ↓ | ↓ |
| | Oil and/or Fat Composition | Oil and/or Fat Composition | Oil and/or Fat Composition |
| POV^{(*1)} | 19.8 | 20.3 | 20.0 |
| (1) Diffusivity^{(*2)} | 3.6 | 3.7 | 3.3 |
| | (0.7) | (0.8) | (0.5) |
| (2) Persistence^{(*2)} | 3.6 | 3.6 | 3.2 |
| | (0.7) | (0.7) | (0.4) |

| | | | |
|---|---|---|---|
| * 1: POV is the peroxide value after the ozone treatment step. *2: The top values for (1) and (2) are mean values, and the values in parentheses below are standard deviations. | | | |

From the results in Table 4, it has been found that sufficient (1) diffusivity and (2) persistence can be obtained if the deodorization temperature is about 230°C or lower. In the case of deodorization process at 160°C in Example 5, there were reports of a slight unusual taste.

## Claims

1. A method for producing an oil and/or fat composition, comprising:
(1) an ozone treatment step of contacting a raw material oil and/or fat with ozone in an amount of 120 mg or more per 1 kg of the raw material oil and/or fat;
(2) an activated clay treatment step of contacting the oil and/or fat ozone-treated in step (1) with activated clay; and
(3) a deodorization step of deodorizing the oil and/or fat activated clay-treated in step (2) at a temperature of 235°C or lower.

2. The method according to claim 1, further comprising: a blending step of blending a flavor component into the deodorized oil and/or fat obtained in the step (3).

3. The method according to claim 1 or 2, wherein the raw material oil and/or fat is soybean oil.

4. The method according to any one of claims 1 to 3, wherein the raw material oil and/or fat is soybean deacidified oil.

5. The method according to any one of claims 1 to 4, wherein a contact time between the raw material oil and/or fat and ozone in the step (1) is 1 minute or longer.

6. The method according to any one of claims 1 to 5, wherein the amount of ozone in the step (1) is 126.3 mg or more per 1 kg of the raw material oil and/or fat.

7. The method according to any one of claims 1 to 6, wherein the deodorization process in the step (3) is performed at a temperature of 230°C or lower.

8. The method according to any one of claims 1 to 7, wherein a peroxide value of the oil and/or fat ozone-treated in the step (1) as measured in accordance with an acetic acid-isooctane method is 6 or more.

9. A flavor-infused oil and/or fat composition comprising: an oil and/or fat composition obtained by the method according to claim 1; and a flavor component.

10. A flavor improver for improving flavor of a flavor component, comprising: an oil and/or fat composition obtained by the method according to claim 1.
